# EUROPÄISCHE PATENTANMELDUNG

(11) **EP 4 794 184 A1**
(43) Veröffentlichungstag der Anmeldung: **19.08.2026**
(21) Anmeldenummer: 25158035.3
(22) Anmeldetag: 14.02.2025
(51) Int. Cl.: H02M 1/44, H02M 7/5387, H02M 7/5395, H02M 1/12

(54) **VERFAHREN ZUR STEUERUNG EINES PHOTOVOLTAIK-WECHSELRICHTERS UND PHOTOVOLTAIK-WECHSELRICHTER ZUR DURCHFÜHRUNG DES VERFAHRENS**

(71) Anmelder: FRONIUS INTERNATIONAL GmbH, 4643 Pettenbach (AT)
(72) Erfinder: ZEILINGER, Lukas, 4643 Pettenbach (AT); PIRCHENFELLNER, Jürgen, 4643 Pettenbach (AT); STARZINGER, Johannes, 4643 Pettenbach (AT); JUNGREITHMAIR, Roland, 4643 Pettenbach (AT)
(74) Vertreter: SONN Patentanwälte GmbH & Co KG

(57) **Zusammenfassung**

Die Erfindung betrifft ein Verfahren zur Steuerung eines Photovolatik-Wechselrichters (10) zur Umwandlung einer Eingangsgleichspannung (U_{DC}) in eine Zwischenkreisspannung (U_{ZK}) und eine Ausgangswechselspannung (U_{AC}), wobei zur Erzeugung der Ausgangswechselspannung (U_{AC}) Halbleiterschalter (Qᵢ) eines Ausgangs-DC/AC-Wandlers (4) in Brückenschaltung mit einer vorgegebenen Schaltfrequenz (f_{S}) wechselweise unipolar angesteuert werden, und der resultierende Ausgangswechselstrom (I_{AC}) mit Hilfe zumindest einer Ausgangsdrossel (L) und einem Ausgangskondensator (C) geglättet wird, sowie einen Photovoltaik-Wechselrichter (10) zur Durchführung des Verfahrens. Erfindungsgemäß wird der Drosselstrom (I_{L}) durch die Ausgangsdrossel (L) erfasst und werden bei Erfüllung einer vorgegebenen Einschaltbedingung (B₁) für den Drosselstrom (I_{L}) die Halbleiterschalter (Qᵢ) des Ausgangs-DC/AC-Wandlers (4) vorübergehend bipolar angesteuert und bei Erfüllung einer vorgegebenen Ausschaltbedingung (B₂) die Halbleiterschalter (Qᵢ) des Ausgangs-DC/AC-Wandlers (4) wieder unipolar angesteuert.

## Beschreibung

Die Erfindung betrifft ein Verfahren zur Steuerung eines Photovoltaik-Wechselrichters zur Umwandlung einer Eingangsgleichspannung in eine Zwischenkreisspannung und eine Ausgangswechselspannung, wobei zur Erzeugung der Ausgangswechselspannung Halbleiterschalter eines Ausgangs-DC/AC-Wandlers in Brückenschaltung mit einer vorgegebenen Schaltfrequenz wechselweise unipolar angesteuert werden, und der resultierende Ausgangswechselstrom mit Hilfe zumindest einer Ausgangsdrossel und einem Ausgangskondensator geglättet wird.

Weiters betrifft die Erfindung einen Photovoltaik-Wechselrichter zur Umwandlung einer von Solarmodulen erzeugten Eingangsgleichspannung in eine Zwischenkreisspannung eines Zwischenkreises und einem Ausgangs-DC/AC-Wandler mit Halbleiterschaltern in Brückenschaltung zur Erzeugung einer Ausgangswechselspannung und einer Steuereinrichtung zur Ansteuerung der Halbleiterschalter des Ausgangs-DC/AC-Wandlers.

Die Erfindung bezieht sich auf ein- oder mehrphasige, trafolose Photovoltaik (PV)-Wechselrichter. PV-Wechselrichter wandeln die von PV-Modulen erzeugte Gleichspannung in Wechselspannung um, indem die Gleichspannung gegebenenfalls über einen DC/DC-Wandler auf eine Zwischenkreisspannung angehoben wird und in einem Ausgangs-DC/AC-Wandler mit Halbleiterschaltern in Brückenschaltung die Zwischenkreisspannung mit einer Schaltfrequenz zerhackt und anschließend geglättet wird, sodass sich ein sinusförmiger Verlauf der Ausgangsspannung angenähert wird. Üblicherweise liegen die Schaltfrequenzen, mit welchen die Halbleiterschalter, meist Bipolartransistor mit isolierter Gate-Elektrode (Insulated-Gate Bipolar Transistoren, IGBT), durch Pulsweitenmodulation angesteuert werden, im Bereich einiger 10 kHz. Eine bessere Annäherung an einen sinusförmigen Ausgangswechselspannungsverlauf kann durch die sogenannte 3-Level-Invertertopologie bei Wechselrichtern erzielt werden, wobei drei verschiedene Ausgangsspannungspegel erzeugt werden. Die sogenannte H6.5-Topologie ist beispielsweise eine übliche Art der Wechselrichter-Topologie, welche sich durch besonders hohe Effizienz, geringe Verlustleistung und kompakte Bauweise auszeichnet.

Bei bekannten PV-Wechselrichtern erfolgt die Steuerung oder Taktung unipolar, um den Rippelstrom in der Ausgangsdrossel reduzieren zu können. Eine bipolare Steuerung oder bipolare Taktung verursacht einen hohen Rippelstrom und höhere Verlustleistungen. Eine unipolare Taktung ist in Bezug auf den Wirkungsgrad und den notwendigen Filteraufwand gegen EMV (Elektromagnetische Verträglichkeit)-Störamplituden grundsätzlich von Vorteil.

Bei geringem Last- oder Ausgangsstrom und einem Phasenverschiebungswinkel zwischen Spannung und Strom (cos(Φ)) ungleich eins treten jedoch hohe Störamplituden (EMV) auf, welche durch entsprechenden Hardware-Aufwand gefiltert werden müssen. Der Grund dafür besteht darin, dass bei geringen Ausgangsströmen (weder das Spannungsversorgungsnetz noch der Ausgangs-DC/AC-Wandler des Wechselrichters treiben Strom) die Spannungen an den Halbleiterschaltern des Wechselrichters nur kapazitiv gehalten werden, wodurch beim Umschalten der Halbleiterschalter kurzzeitig ein hoher Querstrom entsteht, der bis zum Abschluss des Umladevorgangs der parasitären Kapazitäten der Halbleiterschalter fließt. Diese unerwünschten Schwingungen treten in einem Frequenzbereich von üblicherweise ca. 100 MHz auf und verursachen elektromagnetische Interferenzen, welche vermieden werden müssen. Dies erfolgt üblicherweise mit entsprechend aufwändigen Filterschaltungen und Faraday'schen Käfigen um die Photovoltaik-Wechselrichter oder Teilen davon.

Die Aufgabe der vorliegenden Erfindung besteht daher in der Schaffung eines oben genannten Verfahrens zur Steuerung eines Photovoltaik-Wechselrichters und eines Photovoltaik-Wechselrichters zur Durchführung des Verfahrens, wodurch die elektromagnetischen Störungen ohne zusätzliche aufwändige Filterschalungen und Ableitkondensatoren reduziert werden können. Nachteile bekannter Verfahren oder Vorrichtungen sollen vermieden oder zumindest reduziert werden.

Gelöst wird diese erfindungsgemäße Aufgabe in verfahrensmäßiger Hinsicht dadurch, dass der Drosselstrom durch die Ausgangsdrossel erfasst wird und bei Erfüllung einer vorgegebenen Einschaltbedingung für den Drosselstrom die Halbleiterschalter des Ausgangs-DC/AC-Wandlers vorübergehend bipolar angesteuert werden und bei Erfüllung einer vorgegebenen Ausschaltbedingung die Halbleiterschalter des Ausgangs-DC/AC-Wandlers wieder unipolar angesteuert werden. Der Kern der Erfindung besteht also in einer zeitweisen Umschaltung der Ansteuerung der Halbleiterschalter des Ausgangs-DC/AC-Wandlers des PV-Wechselrichters von unipolar auf bipolar, wenn eine vorgegebene Einschaltbedingung erfüllt wird, insbesondere der Ausgangswechselstrom annähernd Null ist. Dabei wird der an sich bekannte Nachteil einer bipolaren Ansteuerung mit höheren Schaltverlusten aufgrund höherer Halbleiterschalterspannung und eines höheren Stromrippels kurzzeitig in Kauf genommen. Dadurch können die elektromagnetischen Störungen reduziert werden und Filter und Ableitkondensatoren eingespart oder kleiner ausgeführt werden. Das erfindungsgemäße Verfahren kann relativ einfach und kostengünstig implementiert werden. Da die Steuereinrichtung eines Photovoltaik-Wechselrichters üblicherweise über die für die Durchführung des Verfahrens notwendigen Eingangsgrößen verfügt, beschränkt sich der Aufwand für das Verfahren im Wesentlichen auf eine entsprechende Software, welche relativ einfach und rasch implementiert werden kann.

Gemäß einem Merkmal der Erfindung wird die Einschaltbedingung für den Drosselstrom durch einen ersten Schwellwert für den Drosselstrom gebildet, und werden bei Unterschreitung dieses ersten Schwellwerts durch den Drosselstrom die Halbleiterschalter des Ausgangs-DC/AC-Wandlers vorübergehend bipolar angesteuert. Dies stellt die einfachste Realisierung der Einschaltbedingung dar, indem ein entsprechend niedriger Schwellwert im Bereich des Nulldurchgangs des Ausgangsstromes bzw. Drosselstromes gewählt wird, bei dem auf die bipolare Ansteuerung oder bipolare Taktung umgeschaltet wird. Der Schwellwert ist als Betrag zu verstehen, wobei sowohl bei Unterschreitung des positiven Schwellwerts als auch bei Unterschreitung des negativen Schwellwerts durch den mit einem Stromrippel überlagerten Drosselstrom eine Umschaltung auf die bipolare Ansteuerung der Halbleiterschalter erfolgt. Im einfachsten Fall ist der Schwellwert ein fixer Wert, welcher in der Steuereinrichtung des PV-Wechselrichters hinterlegt wird. Kompliziertere Verfahren können auch einen sich ändernden Schwellwert (siehe unten) vorsehen.

Die Ausschaltbedingung kann beispielsweise durch eine definierte Zeitdauer gebildet werden. In diesem Fall wird die bipolare Ansteuerung der Halbleiterschalter für diese vorgegebene und definierte Zeitdauer beibehalten und dann wieder auf die unipolare Ansteuerung umgeschaltet. Die Zeitdauer wird entsprechend Erfahrungswerten festgelegt und in der Steuereinrichtung des PV-Wechselrichters hinterlegt.

Dabei kann die definierte Zeitdauer während der die Halbleiterschalter des Ausgangs-DC/AC-Wandlers vorübergehend bipolar angesteuert werden, fix vorgegeben oder auch dynamisch verändert werden.

Die dynamisch veränderbare, definierte Zeitdauer kann beispielsweise in Abhängigkeit der vom Photovoltaik-Wechselrichter zur Verfügung gestellten Leistung, in Abhängigkeit der Zwischenkreisspannung oder in Abhängigkeit einer gemessenen Phasenverschiebung zwischen der Ausgangswechselspannung und dem Ausgangswechselstrom verändert werden.

Alternativ zu einer definierten Zeitdauer kann die Ausschaltbedingung für die bipolare Ansteuerung der Halbleiterschalter des Ausgangs-DC/AC-Wandlers auch durch eine definierte Anzahl an Perioden der Schaltfrequenz gebildet werden. Beispielsweise kann die vorübergehende bipolare Ansteuerung für 5 bis 30 Schaltfrequenz-Perioden aufrechterhalten werden, bevor wieder auf die unipolare Ansteuerung umgeschaltet wird.

Die Ausschaltbedingung kann aber auch durch einen zweiten Schwellwert für einen berechneten Drosselstrom bei unipolarer Ansteuerung der Halbleiterschalter des Ausgangs-DC/AC-Wandlers gebildet werden, und bei Überschreitung dieses zweiten Schwellwerts durch den berechneten Drosselstrom die Halbleiterschalter des Ausgangs-DC/AC-Wandlers wieder unipolar angesteuert werden. Auch dieser zweite Schwellwert ist als Betrag zu verstehen, wobei sowohl bei Überschreitung des positiven zweiten Schwellwerts als auch bei Überschreitung des negativen zweiten Schwellwerts durch den mit einem Stromrippel überlagerten berechneten Drosselstrom bei unipolarer Ansteuerung eine Umschaltung auf die unipolare Ansteuerung der Halbleiterschalter erfolgt. Unter dem berechneten Drosselstrom ist der Verlauf des Drosselstromes zu verstehen, der bei Beibehaltung der unipolaren Ansteuerung auftreten würde.

Sowohl der erste Schwellwert für den Drosselstrom als auch der zweite Schwellwert für den berechneten Drosselstrom können fix vorgegeben oder dynamisch verändert werden.

Im Falle einer dynamischen Veränderung des ersten Schwellwerts für den Drosselstrom und bzw. oder des zweiten Schwellwerts für den berechneten Drosselstrom kann diese Veränderung beispielsweise in Abhängigkeit der vom Photovoltaik-Wechselrichter zur Verfügung gestellten Leistung, in Abhängigkeit der Zwischenkreisspannung oder in Abhängigkeit einer gemessenen Phasenverschiebung zwischen der Ausgangswechselspannung und dem Ausgangswechselstrom vorgesehen werden. Dadurch kann die Dauer der vorübergehenden bipolare Ansteuerung der Halbleiterschalter noch besser auf die realen Bedingungen abgestellt und nicht länger als notwendig beibehalten werden.

Die Halbleiterschalter des Ausgangs-DC/AC-Wandler werden vorzugsweise mit einer Schaltfrequenz zwischen 20kHz und 50kHz angesteuert. Dieser Bereich ist bei PV-Wechselrichtern üblich.

Die erfindungsgemäße Aufgabe wird auch durch einen oben genannten Photovoltaik-Wechselrichter gelöst, wobei die Steuereinrichtung zur Durchführung des oben beschriebenen Verfahrens ausgebildet ist. Zu den dadurch erzielbaren Vorteilen wird auf die obige Beschreibung des Verfahrens verwiesen. Der Aufwand zur erfindungsgemäßen Ausbildung des PV-Wechselrichters beschränkt sich im Wesentlichen auf eine softwaremäßige Änderung, welche besonders einfach in Form eines Software-Updates in die Steuereinrichtung eingespielt werden kann.

Gemäß einem weiteren Merkmal der Erfindung ist ein Eingangs-DC/DC-Wandler zur Umwandlung der Eingangsgleichspannung in die Zwischenkreisspannung vorgesehen. Häufig wird der Eingangs-DC/DC-Wandler durch einen Step-Up-Converter bzw. Aufwärtswandler oder Hochsetzsteller gebildet, der die geringere Eingangsgleichspannung der PV-Module oder Strings an PV-Modulen in eine höhere Zwischenkreisspannung des Zwischenkreises umwandelt.

Die vorliegende Erfindung wird anhand der beigefügten Zeichnungen näher erläutert. Darin zeigen:
- Fig. 1: ein Blockschaltbild eines trafolosen Photovoltaik-Wechselrichters;
- Fig. 2: die Topologie eines Ausgangs-DC/AC-Wandlers eines PV-Wechselrichters mit vier Halbleiterschaltern in Brückenschaltung;
- Fig. 3: den zeitlichen Verlauf des Drosselstromes während einiger Perioden bei rein unipolarer Ansteuerung der Halbleiterschalter des Ausgangs-DC/AC-Wandlers nach dem Stand der Technik;
- Fig. 4: den zeitlichen Verlauf des Drosselstromes bei der erfindungsgemäßen vorübergehenden Umschaltung auf bipolare Ansteuerung der Halbleiterschalter des Ausgangs-DC/AC-Wandlers bei Erfüllung der Einschaltbedingung in Form eines ersten Schwellwerts für den Drosselstrom und einer Ausschaltbedingung in Form einer vorgegebenen Zeitdauer;
- Fig. 5: den zeitlichen Verlauf des Drosselstromes bei der erfindungsgemäßen vorübergehenden Umschaltung auf bipolare Ansteuerung bei Erfüllung der Einschaltbedingung in Form eines ersten Schwellwerts für den Drosselstrom und einer Ausschaltbedingung in Form einer vorgegebenen Anzahl an Perioden mit der Schaltfrequenz;
- Fig. 6: den zeitlichen Verlauf des Drosselstromes bei der erfindungsgemäßen vorübergehenden Umschaltung auf bipolare Ansteuerung bei Erfüllung der Einschaltbedingung in Form eines ersten Schwellwerts für den Drosselstrom und einer Ausschaltbedingung in Form eines zweiten Schwellwerts, der gleich dem ersten Schwellwert für den Drosselstrom ist;
- Fig. 7: den zeitlichen Verlauf des Drosselstromes bei der erfindungsgemäßen vorübergehenden Umschaltung auf bipolare Ansteuerung bei Erfüllung der Einschaltbedingung in Form eines ersten Schwellwerts für den Drosselstrom und einer Ausschaltbedingung in Form eines zweiten Schwellwerts für einen berechneten Drosselstrom bei rein unipolarer Ansteuerung;
- Fig. 8: ein Beispiel der EMV-Störungen in Abhängigkeit der Frequenz gemäß dem Stand der Technik bei rein unipolarer Ansteuerung der Halbleiterschalter des Ausgangs-DC/AC-Wandlers; und
- Fig. 9: ein Beispiel der EMV-Störungen in Abhängigkeit der Frequenz bei einer Variante einer erfindungsgemäßen vorübergehenden bipolaren Ansteuerung der Halbleiterschalter des Ausgangs-DC/AC-Wandlers.

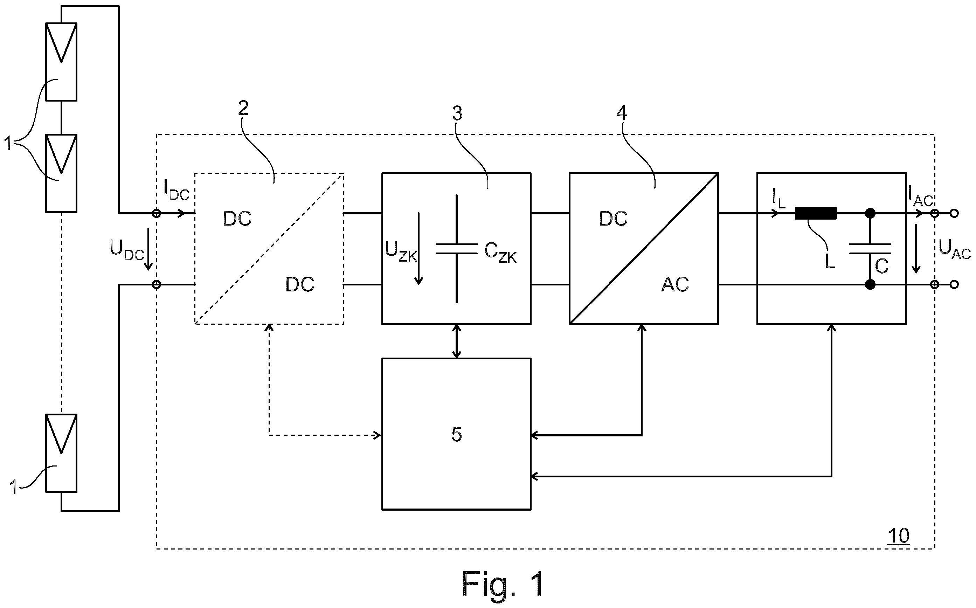

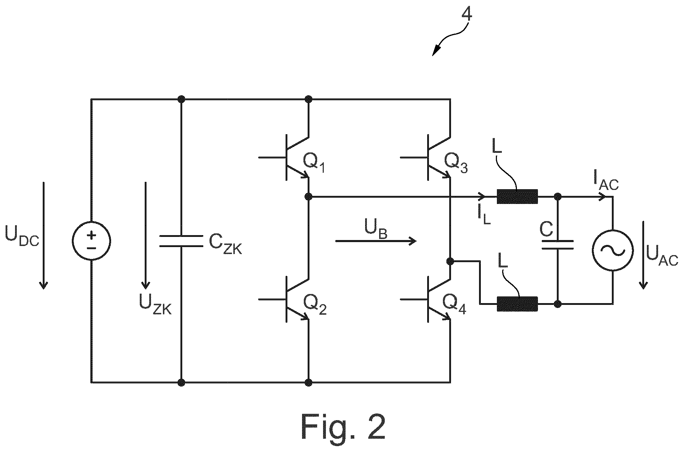

Fig. 1 zeigt ein Blockschaltbild eines trafolosen Photovoltaik-Wechselrichters 10. Der PV-Wechselrichter 10 dient zur Umwandlung einer von Solarmodulen 1 oder mehreren, in sogenannten Strings zusammengeschalteten Solarmodulen 1 erzeugten Eingangsgleichspannung U_{DC} in eine Zwischenkreisspannung U_{ZK} eines Zwischenkreises 3, der durch einen Zwischenkreiskondensator C_{ZK} dargestellt ist. Wenn die Eingangsgleichspannung U_{DC} bereits auf dem gewünschten Niveau der Zwischenkreisspannung U_{ZK} liegt, braucht kein Eingangs-DC/DC-Wandler 2 vorgesehen werden. Wenn die Eingangsgleichspannung U_{DC} auf die höhere Zwischenkreisspannung U_{ZK} umgewandelt werden muss, geschieht dies meist mit einem Step Up Converter oder Aufwärtswandler als Eingangs-DC/DC-Wandler 2. In einem Ausgangs-DC/AC-Wandler 4 mit Halbleiterschaltern Qᵢ in Brückenschaltung (siehe Fig. 2) wird die Zwischenkreisspannung U_{ZK} zerhackt, wodurch eine Wechselspannung angenähert wird. Das Ansteuern der Halbleiterschalter Qᵢ, welche üblicherweise durch Transistoren gebildet sind, mit einer Pulsweitenmodulation (PWM) wird in einer entsprechenden Steuereinrichtung 5 durchgeführt. Nach einer Glättung der resultierenden Ausgangsspannung des Ausgangs-DC/AC-Wandlers 4 mit Hilfe zumindest einer Ausgangsdrossel L und einem Ausgangskondensator C resultiert eine im Wesentlichen sinusförmige Ausgangswechselspannung U_{AC} am Ausgang des PV-Wechselrichters 10, welche in ein Versorgungsnetz eingespeist und/ bzw. oder zum Betreiben von Verbrauchern (nicht dargestellt) verwendet werden kann. Die Ansteuerung der Halbleiterschalter Qᵢ des Ausgangs-DC/AC-Wandlers 4 über die Steuereinrichtung 5 erfolgt üblicherweise unibipolar. Nachteilig dabei ist jedoch, dass bei einem kleinen Momentanwert der Ausgangswechselspannung U_{AC} ein sehr kleiner Drosselstrom I_{L} bzw. ein sehr kleiner Ausgangswechselstrom I_{AC} aufgrund der parasitären Kapazitäten der Halbleiterschalter Qᵢ starke elektromagnetische Störungen hervorruft, welche durch relativ aufwändige Filterschaltungen oder andere Maßnahmen, wie zum Beispiel Faraday'sche Käfige eingedämmt werden müssen.

Der Drosselstrom I_{L} und der Ausgangswechselstrom I_{AC} unterscheiden sich dadurch, dass der Ausgangswechselstrom I_{AC} nach der Filterstufe bestehend aus der Ausgangsdrossel L und dem Ausgangskondensator C und nach einer Glättung des resutierenden Spannungsrippels in das Wechselspannungsnetz eingespeist wird.

Fig. 2 zeigt die Topologie eines Ausgangs-DC/AC-Wandlers 4 eines PV-Wechselrichters 10 aus Fig. 1 mit vier Halbleiterschaltern Q₁ bis Q₄ in Brückenschaltung. In Fig. 2 ist die Brückenschaltung für einen einphasigen PV-Wechselrichter 10 dargestellt. Eine Anwendung bei einem dreiphasigen PV-Wechselrichter, welcher für jede Phase eine solche Brückenschaltung aufweist, ist analog möglich.

Die Gates der Feldeffekttransistoren zur Bildung der Halbleiterschalter Q₁ bis Q₄ werden von der Steuereinrichtung 5 (siehe Fig. 1) entsprechend angesteuert, sodass am Ausgang der Brückenschaltung eine im Wesentlichen sinusförmige Spannung resultiert. Die sogenannte Brückenspannung U_{B} liegt zwischen den durch die Halbleiterschalter Q₁ und Q₂ sowie Q₃ und Q₄ gebildeten Brückenzweigen an und wird dann mit Hilfe einer oder, wie hier gezeigt, zweier Ausgangsdrosseln L und einem Ausgangskondensator C geglättet. Die resultierende Ausgangswechselspannung U_{AC} bzw. der Ausgangswechselstrom I_{AC} kann in ein Versorgungsnetz eingespeist oder zum Betreiben von Verbrauchern (nicht dargestellt) verwendet werden.

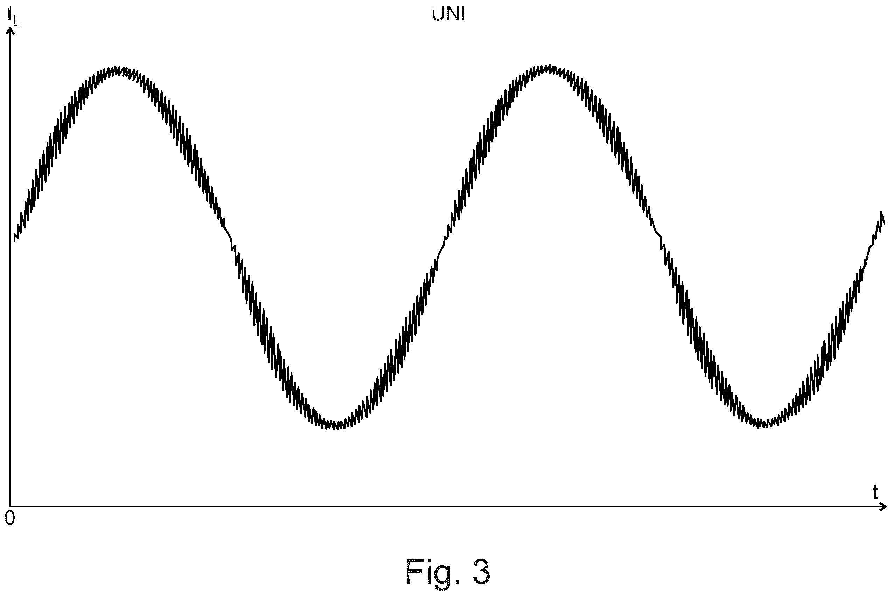

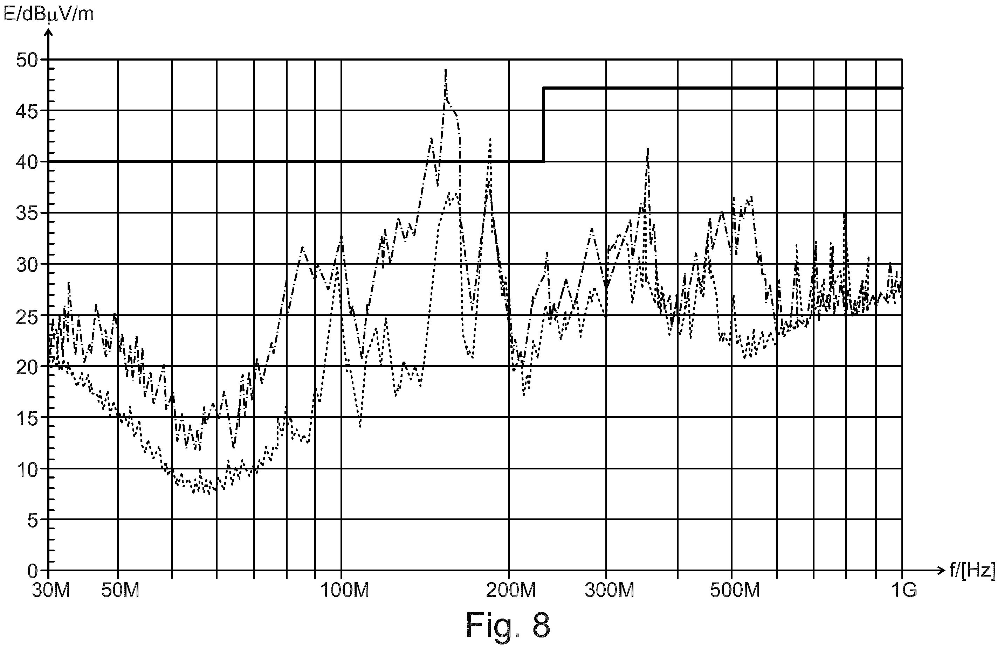

Fig. 3 zeigt den Verlauf des Drosselstromes I_{L} in Abhängigkeit der Zeit t bei rein unipolarer Ansteuerung UNI der Halbleiterschalter Qᵢ des Ausgangs-DC/AC-Wandlers 4 nach dem Stand der Technik. Dargestellt sind einige Perioden mit den entsprechenden Nulldurchgängen. Durch die Einspeisung der vom PV-Wechselrichter 10 erzeugten Ausgangswechselspannung U_{AC} in ein Versorgungsnetz oder das Versorgen von Verbrauchern mit elektrischer Energie wird der Zwischenkreisspannung U_{ZK} ein Wechselspannungsanteil, ein sogenannter Spannungsrippel, mit der doppelten Netzfrequenz überlagert. Dieser Rippel ist auch dem Drosselstrom I_{L} bzw. Ausgangswechselstrom I_{AC} überlagert. Insbesondere bei sehr kleinen Drosselströmen I_{L} bzw. Ausgangswechselströmen I_{AC} im Bereich des Nulldurchgangs resultieren aufgrund der parasitären Kapazitäten der Halbleiterschalter Qᵢ starke elektromagnetische Störungen (Fig. 8), welche mit der vorliegenden Erfindung minimiert werden sollen.

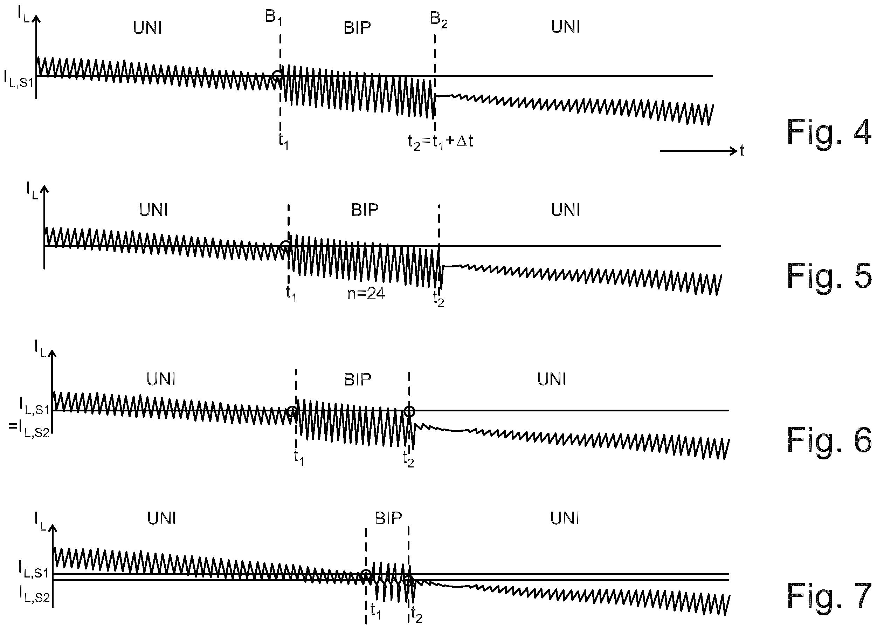

Fig. 4 zeigt den zeitlichen Verlauf des Drosselstromes I_{L} im Bereich eines Nulldurchgangs in vergrößerter Darstellung gegenüber Fig. 3 bei der erfindungsgemäßen vorübergehenden Umschaltung von unipolarer Ansteuerung UNI auf bipolare Ansteuerung BIP der Halbleiterschalter Qᵢ des Ausgangs-DC/AC-Wandlers 4 bei Erfüllung der Einschaltbedingung B₁ in Form eines ersten Schwellwerts |I_{L,S1}| für den Drosselstrom I_{L} und einer Ausschaltbedingung B₂ in Form einer vorgegebenen oder definierten Zeitdauer Δt der bipolare Ansteuerung der Halbleiterschalter Qᵢ. Wie dem zeitlichen Verlauf des Drosselstroms I_{L} in Fig. 3 entnommen werden kann, gibt es pro Periode unterschiedliche Nulldurchgänge, je nachdem ob der Strom von der positiven Halbwelle zur negativen Halbwelle übergeht oder von der negativen Halbwelle auf die positive Halbwelle. Demgemäß wird der erste Schwellwert |I_{L,S1}| für den Drosselstrom I_{L} in Form eines Betrages angegeben. Im dargestellten Verlauf des Drosselstroms I_{L} in Fig. 4 findet der Nulldurchgang von der positiven Halbwelle zur negativen Halbwelle des Drosselstroms statt, weshalb der erste Schwellwert ein positiver Schwellwert |I_{L,S1}| des Drosselstromes I_{L} ist. Für die Umschaltung von unipolarer Ansteuerung UNI auf bipolare Ansteuerung BIP ist die Einschaltbedingung B₁ und für die Umschaltung von bipolarer Ansteuerung BIP wieder auf die unipolare Ansteuerung die Ausschaltbedingung B₂ ausschlaggebend. Beim Wechsel der negativen Halbwelle auf die positive Halbwelle findet der Nulldurchgang im aufsteigenden Stromverlauf analog statt (nicht dargestellt). Wenn die Schwankung des Drosselstromes I_{L} unter den Betrag des ersten Schwellwerts |I_{L,S1}| sinkt, wird die unipolare Ansteuerung UNI der Halbleiterschalter Qᵢ auf eine bipolare Ansteuerung BIP umgeschaltet. Dies ist in Figur 4 zum Zeitpunkt t₁ der Fall. Bei der bipolaren Ansteuerung BIP werden die Halbleiterschalter Qᵢ auch mit negativen Spannungswerten angesteuert, wodurch ein höherer Rippel entsteht. Bei der vorliegenden Erfindung wird der an sich bekannte Nachteil der bipolaren Ansteuerung BIP mit höheren Schaltverlusten kurzzeitig in Kauf genommen, um die elektromagnetischen Störungen zu reduzieren und somit den Aufwand zur Abschirmung solcher elektromagnetischen Störungen zu minimieren.

Beim Ausführungsbeispiel gemäß Fig. 4 wird die bipolare Ansteuerung BIP über eine vorgegebene, definierte Zeitdauer Δt aufrechterhalten und danach, zum Zeitpunkt t₂ = t₁ + Δt wieder mit der unipolaren Ansteuerung UNI der Halbleiterschalter Qᵢ fortgesetzt, bei der wieder geringere Schaltverluste resultieren.

Fig. 5 zeigt den zeitlichen Verlauf des Drosselstromes I_{L} bei der erfindungsgemäßen vorübergehenden Umschaltung auf bipolare Ansteuerung BIP bei Erfüllung der Einschaltbedingung B₁ in Form eines ersten Schwellwerts |I_{L,S1}| für den Drosselstrom I_{L} und einer Ausschaltbedingung B₂ in Form einer vorgegebene Anzahl n an Perioden mit der Schaltfrequenz f_{S}. Wenn der Drosselstrom I_{L} unter den Betrag des ersten Schwellwerts |I_{L,S1}| sinkt, wird zum Zeitpunkt t₁ die unipolare Ansteuerung UNI der Halbleiterschalter Qᵢ auf eine bipolare Ansteuerung BIP umgeschaltet. Die bipolare Ansteuerung BIP wird hier über eine vorgegebene Anzahl n=24 an Perioden der Schaltfrequenz f_{S} aufrechterhalten. Die Ausschaltbedingung B₂ ist nach 24 Perioden n erfüllt und es wird wieder auf eine unipolare Ansteuerung UNI der Halbleiterschalter Qᵢ umgeschaltet.

Fig. 6 zeigt den zeitlichen Verlauf des Drosselstromes I_{L} bei der erfindungsgemäßen vorübergehenden Umschaltung auf bipolare Ansteuerung BIP bei Erfüllung der Einschaltbedingung B₁ in Form eines ersten Schwellwerts |I_{L,S1}| für den Drosselstrom I_{L} und einer Ausschaltbedingung B₂ in Form eines zweiten Schwellwerts |I_{L,S2}|, der gleich dem ersten Schwellwert |I_{L,S1}| für den Drosselstrom I_{L} ist. Wenn der Drosselstrom I_{L} unter den Betrag des ersten Schwellwerts |I_{L,S1}| sinkt, wird zum Zeitpunkt t₁ die unipolare Ansteuerung UNI der Halbleiterschalter Qᵢ auf eine bipolare Ansteuerung BIP umgeschaltet. Wenn der Drosselstrom I_{L} während der bipolaren Ansteuerung BIP wieder unter den Betrag des zweiten Schwellwerts |I_{L,S2}|, der gleich dem ersten Schwellwert |I_{L,S1}| ist, sinkt, wird zum Zeitpunkt t₂ wieder auf eine unipolare Ansteuerung UNI der Halbleiterschalter Qᵢ umgeschaltet.

Fig. 7 zeigt den zeitlichen Verlauf des Drosselstromes I_{L} bei der erfindungsgemäßen vorübergehenden Umschaltung auf bipolare Ansteuerung BIP bei Erfüllung der Einschaltbedingung B₁ in Form eines ersten Schwellwerts |I_{L,S1}| für den Drosselstrom I_{L} und einer Ausschaltbedingung B₂ in Form eines zweiten Schwellwerts |I_{L,S2}| für einen berechneten Drosselstrom I_{L}' bei rein unipolarer Ansteuerung UNI. Wenn der gemessene Drosselstrom I_{L} unter den Betrag des ersten Schwellwerts |I_{L,S1}| sinkt, wird zum Zeitpunkt t₁ die unipolare Ansteuerung UNI der Halbleiterschalter Qᵢ auf eine bipolare Ansteuerung BIP umgeschaltet. Danach erfolgt eine Berechnung des fiktiven Drosselstroms I_{L}', der ohne Umschaltung der Ansteuerung bei rein unipolarer Ansteuerung UNI resultieren würde. Dieser berechnete Drosselstrom I_{L}' wird dann mit dem zweiten Schwellwert |I_{L,S2}| als Ausschaltbedingung B₂ verglichen und bei Unterschreitung des berechneten Drosselstroms I_{L}' unter den zweiten Schwellwert |I_{L,S2}| zum Zeitpunkt t₂ wieder auf unipolare Ansteuerung UNI umgeschaltet. Für die Berechnung gibt es entsprechend unterschiedliche Möglichkeiten. Insbesondere sind folgende Parameter erforderlich:
- Ausgangswechselstrom I_{AC}
- Zwischenkreisspannung U_{ZK}
- DutyCycle oder Tastgrad der bipolaren Ansteuerung BIP, welcher aus dem DutyCycle der unipolaren Ansteuerung UNI umgerechnet wird.

Fig. 8 zeigt ein Beispiel der EMV-Störungen in Abhängigkeit der Frequenz f im logarithmischen Maßstab gemäß dem Stand der Technik bei rein unipolarer Ansteuerung UNI der Halbleiterschalter Qᵢ des Ausgangs-DC/AC-Wandlers 4. Dargestellt ist die mit einer horizontalen (strichliert) und einer vertikalen (strichpunktiert) Antenne aufgenommene elektrische Feldstärke E in dBµV/m in Abhängigkeit der Frequenz f in Hz. Das Diagramm zeigt deutliche Spitzen an elektromagnetischen Störungen im Bereich zwischen 100 MHz und 200 MHz, welche die eingezeichneten Grenzwerte überschreiten.

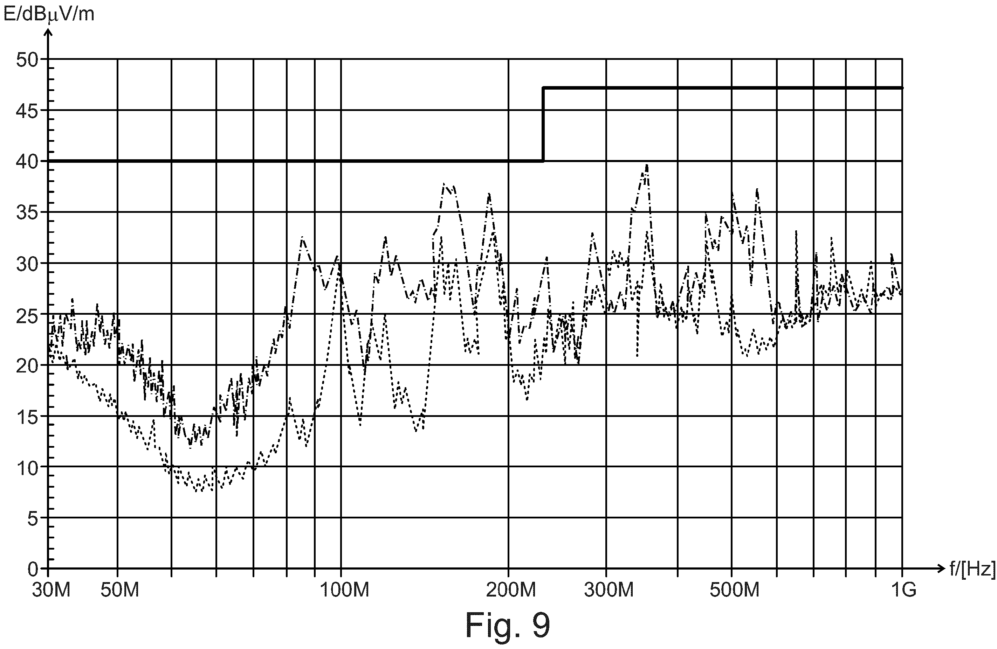

Fig. 9 zeigt ein Beispiel der EMV-Störungen in Abhängigkeit der Frequenz f bei einer Variante der erfindungsgemäßen vorübergehenden bipolaren Ansteuerung BIP der Halbleiterschalter Qᵢ des Ausgangs-DC/AC-Wandlers 4. Im Vergleich zu den elektromagnetischen Störungen gemäß Fig. 8 ohne Umschaltung der Ansteuerung ist eine deutliche Reduktion der Intensität der Störungen insbesondere im Frequenzbereich zwischen 100 MHz und 200 MHz zu verzeichnen. Die eingezeichneten Grenzwerte werden hier nicht überschritten. Aufgrund der Reduktion können die Maßnahmen gegen derartige EMV-Störungen, wie Filterschaltungen oder Faraday'sche Käfige geringer ausfallen bzw. sogar eingespart werden.

Die vorliegende Erfindung sieht eine einfache, softwaremäßig implementierbare Methode zur Reduktion der elektromagnetischen Störungen von Photovoltaik-Wechselrichtern vor.

## Patentansprüche

1. Verfahren zur Steuerung eines Photovolatik-Wechselrichters (10) zur Umwandlung einer Eingangsgleichspannung (U_{DC}) in eine Zwischenkreisspannung (U_{ZK}) und eine Ausgangswechselspannung (U_{AC}), wobei zur Erzeugung der Ausgangswechselspannung (U_{AC}) Halbleiterschalter (Qᵢ) eines Ausgangs-DC/AC-Wandlers (4) in Brückenschaltung mit einer vorgegebenen Schaltfrequenz (f_{S}) wechselweise unipolar angesteuert werden, und der resultierende Ausgangswechselstrom (I_{AC}) mit Hilfe zumindest einer Ausgangsdrossel (L) und einem Ausgangskondensator (C) geglättet wird, **dadurch gekennzeichnet, dass** der Drosselstrom (I_{L}) durch die Ausgangsdrossel (L) erfasst wird und bei Erfüllung einer vorgegebenen Einschaltbedingung (B₁) für den Drosselstrom (I_{L}) die Halbleiterschalter (Qᵢ) des Ausgangs-DC/AC-Wandlers (4) vorübergehend bipolar angesteuert werden und bei Erfüllung einer vorgegebenen Ausschaltbedingung (B₂) die Halbleiterschalter (Qᵢ) des Ausgangs-DC/AC-Wandlers (4) wieder unipolar angesteuert werden.

2. Verfahren nach Anspruch 1, **dadurch gekennzeichnet, dass** die Einschaltbedingung (B₁) für den Drosselstrom (I_{L}) durch einen ersten Schwellwert (|I_{L,S1}|) für den Drosselstrom (I_{L}) gebildet wird, und bei Unterschreitung dieses ersten Schwellwerts (|I_{L,S1}|) durch den Drosselstrom (I_{L}) die Halbleiterschalter (Qᵢ) des Ausgangs-DC/AC-Wandlers (4) vorübergehend bipolar angesteuert werden.

3. Verfahren nach Anspruch 1 oder 2, **dadurch gekennzeichnet, dass** die Ausschaltbedingung (B₂) durch eine definierte Zeitdauer (Δt) gebildet wird.

4. Verfahren nach Anspruch 3, **dadurch gekennzeichnet, dass** die definierte Zeitdauer (Δt) während der die Halbleiterschalter (Qᵢ) des Ausgangs-DC/AC-Wandlers (4) vorübergehend bipolar angesteuert werden, fix vorgegeben wird.

5. Verfahren nach Anspruch 3, **dadurch gekennzeichnet, dass** die definierte Zeitdauer (Δt) während der die Halbleiterschalter (Qᵢ) des Ausgangs-DC/AC-Wandlers (4) vorübergehend bipolar angesteuert werden, dynamisch verändert wird.

6. Verfahren nach Anspruch 5, **dadurch gekennzeichnet, dass** die definierte Zeitdauer (Δt) in Abhängigkeit der vom Photovoltaik-Wechselrichter (10) zur Verfügung gestellten Leistung, in Abhängigkeit der Zwischenkreisspannung (U_{ZK}) oder in Abhängigkeit einer gemessenen Phasenverschiebung (cos(Φ)) zwischen der Ausgangswechselspannung (U_{AC}) und dem Ausgangswechselstrom (I_{AC}) verändert wird.

7. Verfahren nach Anspruch 1 oder 2, **dadurch gekennzeichnet, dass** die Ausschaltbedingung (B₂) durch eine definierte Anzahl (n) an Perioden (Tₛ) der Schaltfrequenz (fₛ) gebildet wird.

8. Verfahren nach Anspruch 1 oder 2, **dadurch gekennzeichnet, dass** die Ausschaltbedingung (B₂) durch einen zweiten Schwellwert (|I_{L,S2}|) für einen berechneten Drosselstrom (I_{L}') bei unipolarer Ansteuerung der Halbleiterschalter (Qi) des Ausgangs-DC/AC-Wandlers gebildet wird, und bei Überschreitung dieses zweiten Schwellwerts (|I_{L,S2}|) durch den berechneten Drosselstrom (I_{L}') die Halbleiterschalter (Qᵢ) des Ausgangs-DC/AC-Wandlers (4) wieder unipolar angesteuert werden.

9. Verfahren nach einem der Ansprüche 2 bis 8, **dadurch gekennzeichnet, dass** der erste Schwellwert (|I_{L,S1}|) für den Drosselstrom (I_{L}) und bzw. oder der zweite Schwellwert (|I_{L,S2}|) für den berechneten Drosselstrom (I_{L}') fix vorgegeben wird.

10. Verfahren nach einem der Ansprüche 2 bis 8, **dadurch gekennzeichnet, dass** der erste Schwellwert (|I_{L,S1}|) für den Drosselstrom (I_{L}) und bzw. oder der zweite Schwellwert (|I_{L,S2}|) für den berechneten Drosselstrom (I_{L}') dynamisch verändert wird.

11. Verfahren nach Anspruch 10, **dadurch gekennzeichnet, dass** der erste Schwellwert (|I_{L,S1}|) für den Drosselstrom (I_{L}) und bzw. oder der zweite Schwellwert (|I_{L,S2}|) für den berechneten Drosselstrom (I_{L}') in Abhängigkeit der vom Photovoltaik-Wechselrichter (10) zur Verfügung gestellten Leistung, in Abhängigkeit der Zwischenkreisspannung (U_{ZK}) oder in Abhängigkeit einer gemessenen Phasenverschiebung (cos(Φ)) zwischen der Ausgangswechselspannung (U_{AC}) und dem Ausgangswechselstrom (I_{AC}) verändert wird.

12. Verfahren nach einem der Ansprüche 1 bis 11, **dadurch gekennzeichnet, dass** die Halbleiterschalter (Qᵢ) des Ausgangs-DC/AC-Wandler (4) mit einer Schaltfrequenz (f_{S}) zwischen 20kHz und 30kHz angesteuert werden.

13. Photovoltaik-Wechselrichter (10) zur Umwandlung einer von Solarmodulen (1) erzeugten Eingangsgleichspannung (U_{DC}) in eine Zwischenkreisspannung (U_{ZK}) eines Zwischenkreises (3) und einem Ausgangs-DC/AC-Wandler (4) mit Halbleiterschaltern (Qᵢ) in Brückenschaltung zur Erzeugung einer Ausgangswechselspannung (U_{AC}) und einer Steuereinrichtung (5) zur Ansteuerung der Halbleiterschalter (Qᵢ) des Ausgangs-DC/AC-Wandlers (4), **dadurch gekennzeichnet, dass** die Steuereinrichtung (5) zur Durchführung des Verfahrens nach einem der Ansprüche 1 bis 12 ausgebildet ist.

14. Photovoltaik-Wechselrichter (10) nach Anspruch 13, **dadurch gekennzeichnet, dass** ein Eingangs-DC/DC-Wandler (2) zur Umwandlung der Eingangsgleichspannung (U_{DC}) in die Zwischenkreisspannung (U_{ZK}) vorgesehen ist.
